# EUROPÄISCHE PATENTANMELDUNG

(11) **EP 0 582 161 A1**
(43) Veröffentlichungstag der Anmeldung: **09.02.1994**
(21) Anmeldenummer: 93111894.7
(22) Anmeldetag: 24.07.1993
(51) Int. Cl.: B65B 13/32, B65B 51/22

(54) **Maschine zum Umschnüren von Packgut**

(30) Priorität: 01.08.1992 DE 4225480
(71) Anmelder: Maschinenfabrik Gerd Mosca GmbH, D-69428 Waldbrunn-Str. (DE)
(72) Erfinder: Lüdtke, Peter, D-69412 Eberbach (DE)
(74) Vertreter: Freischem, Werner, Dipl.-Ing.

(57) **Zusammenfassung**

Eine Umschnürungsmaschine besteht aus
- einem Packguttisch (2),
- einer Umschnürungsvorrichtung (8) mit Greifer, der das Packgut umläuft und eine Schlaufe um das Packgut legt,
- einer Spannvorrichtung (5), welche die Schlaufe um das Packgut spannt,
- einer Schließeinrichtung, welche überlappende Bereiche der Schlaufe miteinander verklebt oder verschweißt, mit einer Widerlagerplatte (10) und einem gegen die Widerlagerplatte verschiebbaren Schließkopf (9),
- einer ersten Klemme (11), welche den Anfangsbereich der Schlaufe festhält,
- einer zweiten Klemme (12), welche den Endbereich der Schlaufe festhält und
- einer Schneideinrichtung (16,17) zum Abschneiden der Schlaufe.

Zur Steigerung der Arbeitsgeschwindigkeit und Vereinfachung der Steuerung ist die erste Klemme (11) in Höhe der Widerlagerplatte (10) angeordnet. Unterhalb dieser Klemme (11) ist ein den Schlaufenanfang (14) unter die Widerlagerplatte (10) bringender Zubringer (13) angeordnet, der vor Hochfahren des Schließkopfes (9) in seine Ausgangsstellung zurückbewegbar ist. Der Zulauf (18) des Umschnürungsmittels (4) ist höher angeordnet als das Greiferoberteil (7), und das Greiferunterteil (7') ist nach Schließen der Klemme (11) kurzzeitig aus der Umschnürungsebene herausbewegbar, so daß der neue Schlaufenanfang zwischen die Teile des Greifers kommt.

## Beschreibung

Die Erfindung geht aus von einer Maschine zum Umschnüren von Packgut, mit
- einem Packguttisch, der in der Umschnürungsebene zum Durchlaß eines Umschnürungsmittels einen Spalt aufweist,
- einer Umschnürungsvorrichtung, die einen den Anfang des Umschnürungsmittels unterhalb des Packguttisches in einer Ausgangsstellung erfassenden, aus Oberteil und Unterteil bestehenden Greifer, der das Packgut in der Umschnürungsebene umläuft und dabei das Umschnürungsmittel von einem Vorrat abzieht und in seine Ausgangsstellung zurückkehrt,
- einer Spannvorrichtung, welche die vom Umschnürungsmittel gebildete Schlaufe um das Packgut spannt,
- einer Schließeinrichtung, welche einander überlappende Bereiche der Schlaufe miteinander verklebt oder verschweißt und die sich zusammensetzt aus einer unmitteilbar unter das Packgut im Überlappungsbereich der Schlaufe schiebbaren Widerlagerplatte und einem gegen die sich überlappenden Bereiche und die Widerlagerplatte verschiebbaren Schließkopf,
- einer ersten Klemme, welche den vorderen Teil der Schlaufe in Nähe des dem Umschnürungsmittel-Zulauf zugewandten Endes der Widerlaperplatte festhält,
- einer zweiten Klemme, welche den hinteren Teil der Schlaufe in Nähe des dem Umschnürungsmittel-Zulauf abgewandten Endes der Widerlagerplatte festhält und
- einer Schneideinrichtung, welche die Schlaufe vom Umschnürungsmittel abschneidet, nachdem der Greifer den Anfang für die folgende Schlaufe erfaßt hat.

Umschnürungsmaschinen dieser Art sind bekannt aus der DE-OS 22 25 297 und DE-OS 22 25 298.

Bei diesen bekannten Maschinen arbeitet sowohl die erste Klemme als auch die zweite Klemme gegen die Unterseite der Widerlagerplatte, und der Greifer wird nach Schließen der ersten Klemme und während des Verschweißens der einander überlappenden Bandenden durch einen Rückwärtsgang der Umschnürungsvorrichtung in die Ausgangsstellung zurückgeführt, in der er einen neuen Bandanfang für die folgende Umschnürung übernimmt. Durch die relativ weiten Wege, die der Greifer zur Herstellung einer Umschnürung zurücklegen muß, arbeiten die bekannten Maschinen relativ langsam. Ferner muß der Greifer mit seinen beiden Teilen aus der Umschnürungsebene herausgezogen werden, um aus der Umschnürungs-Endstellung in die Ausgangsstellung zurückgefahren werden zu können. Auch diese Bewegungen des Greifers bedingen einen größeren Zeit- und Steuerungsaufwand. Bei der bekannten Umschnürungsmaschine ist das Umschnürungsmittel ein relativ dickes Kunststoffband, dessen überlappenden Bereiche mittels einer Heizzunge angeschmolzen werden, bevor der Schließkopf die überlappenden Bereiche mit ihren angeschmolzenen Bereichen gegeneinander und gegen die Widerlagerplatte drückt und so die Verbindung der Schlaufenenden herstellt.

Bei anderen, aus der DE-PS 1 297 538 und DE-OS 1 956 425 bekannten Umschnürungsmaschinen mit das Packgut umkreisenden Greifern übergibt der Greifer das herumgeführte Umschnürungsmittel an mit der Schließvorrichtung zusammenwirkende Klemmen, wobei eine Klemme das von der Vorratsspule kommende Ende des Umschnürungsmittels während des Schließ- und Abtrennvorganges hält und anschließend den neuen Bandanfang zum Greifer hinführt und an diesen übergibt. Diese Klemme, der außer der Festhaltung auch noch die Aufgabe eines Zwischenförderers zukommt, bedingt bei den bekannten Maschinen verhältnismäßig aufwendige Steuerungseinrichtungen.

Der Erfindung liegt die Aufgabe zugrunde, die eingangs beschriebene Umschnürungsmaschine derart auszubilden, daß ihre Arbeitsgeschwindigkeit erheblich gesteigert werden kann und ihre Steuerung vereinfacht ist.

Diese Aufgabe wird erfindungsgemäß dadurch gelöst, daß die erste Klemme in Höhe der Widerlagerplatte angeordnet ist und unterhalb dieser Klemme und oberhalb des in End- und Ausgangsstellung befindlichen Greifers ein den Schlaufenanfang nach Schließen der Klemme und Öffnen des Greifers unter die Unterseite der Widerlagerplatte bringender Zubringer angeordnet ist, der vor Hochfahren des Schließkopfes in seine Ausgangsstellung zurückbewegbar ist und daß der Zulauf des Umschnürungsmittels höher angeordnet ist als die Unterseite des in Ausgangsstellung befindlichen Greiferoberteils und das Greiferunterteil nach Schließen der Klemme aus der Umschnürungsebene herausbewegbar und vor Hochfahren des Schließkopfes und der beweglichen Schneide zum Ergreifen eines Anfangs einer folgenden Schlaufe in die Umschnürungsebene zurückbewegbar ist.

Die erfindungsgemäße Umschnürungsmaschine hat den Vorteil, daß die Ausgangsstellung des Greifers vor der Umschnürung und die Endstellung des Greifers am Ende der Umschnürung exakt gleich sind. Die Bewegung der Umschnürungsvorrichtung kann sehr schnell erfolgen, und die Ausgangs- und Endstellung dieser Vorrichtung und des Greifers kann durch einen einschwenkbaren Anschlag bestimmt werden. Durch ein kurzes Herausziehen des Greiferunterteils aus der Umschnürungsebene gelangt das Umschnürungsmittel in eine Stellung, in der es durch Zurückschieben des Greiferunterteils in die Umschnürungsebene und Schließen des Greifers vom Greifer am Anfang einer folgenden Schlaufe erfaßt wird. Die Bewegungen des beweglichen Anschlags, der Klemmen, des Zubringers für den Schlaufenanfang,des Greiferunterteils, des Schließkopfes und der beweglichen Schneide können relativ klein und die der den Greifer tragenden Umschnürungsvorrichtung schnell sein, so daß eine hohe Arbeitsgeschwindigkeit erreichbar ist.

Die Umschnürungsvorrichtung, die den Greifer um das Packgut bewegt, kann ein von einem Antrieb angetriebener, den Packguttisch und das Packgut umgebender Ring sein oder ein Kurbelarm, dessen freies Ende bis zur Umschnürungsebene reicht und der dort den Greifer trägt. Der Greifer kann aber auch an einer Förderkette oder einem Förderband angeordnet sein, die bzw. das den Packguttisch und das Packgut in oder neben der Umschnürungsebene umgibt. Am Maschinengestell ist ein bewegbarer ortsfester Anschlag angeordnet, der mit einem an der Umschnürungsvorrichtung befindlichen Anschlag so zusammenwirkt, daß er die Umschnürungsvorrichtung anhält, wenn der Greifer seine End- und Ausgangsstellung erreicht hat. Bei Beginn einer neuen Umschnürung wird der ortsfeste Anschlag kurzzeitig aus der Bahn des an der Umschnürungsvorrichtung befindlichen Anschlags herausgeschwenkt.

Vorteilhafterweise ist der Schließkopf ein Ultraschall-Schweißkopf, so daß auch relativ dünne, unbehandelte Kunststoff-Folie als Umschnürungsmittel benutzt werden kann.

Unter der Widerlagerplatte und im Bereich oberhalb des Schließkopfes ist vorteilhafterweise die Mündung einer Klebemittelzuführung angeordnet, durch welche ein Abschnitt eines Kunststoffbandes oder ein Klebemittel zwischen die zu verbindenden, einander überlappenden Endbereiche der das Packgut umgebenden Schlaufe des Umschnürungsmittels rechtwinklig zur Umschnürungsebene zugeführt werden kann. Diese Klebstoffzuführung gibt die Möglichkeit, als Umschnürungsmittel nicht nur verschweißbare Kunststoffbänder zu verwenden, sondern auch Bänder aus Papier, gewebte Bänder, Bänder aus Faservlies oder dergleichen. Mit Hilfe des Ultraschall-Schließkopfes wird der Klebstoff aktiviert.

Weitere Merkmale der Erfindung sind den Unteransprüchen zu entnehmen.

In der folgenden Beschreibung wird ein Ausführungsbeispiel der Erfindung unter Bezugnahme auf die Zeichnungen näher erläutert. Die Zeichnungen zeigen in
- Fig. 1: eine schematische Zeichnung der erfindungsgemäßen Umschnürungsmaschine, bei der die funktionswesentlichen Teile während der Umschnürung eines Packgutes dargestellt sind,
- Fig. 2: die funktionswesentlichen Teile am Ende der Umschnürung,
- Fig. 3: die Maschinenteile nach Öffnen des Greifers,
- Fig. 4: die Maschinenteile beim Zuführen des Anfangsbereiches der Schlaufe unter die Widerlagerplatte,
- Fig. 5: die Maschinenteile beim Schließen der Schlaufe und Abschneiden dieser Schlaufe vom Umschnürungsband.

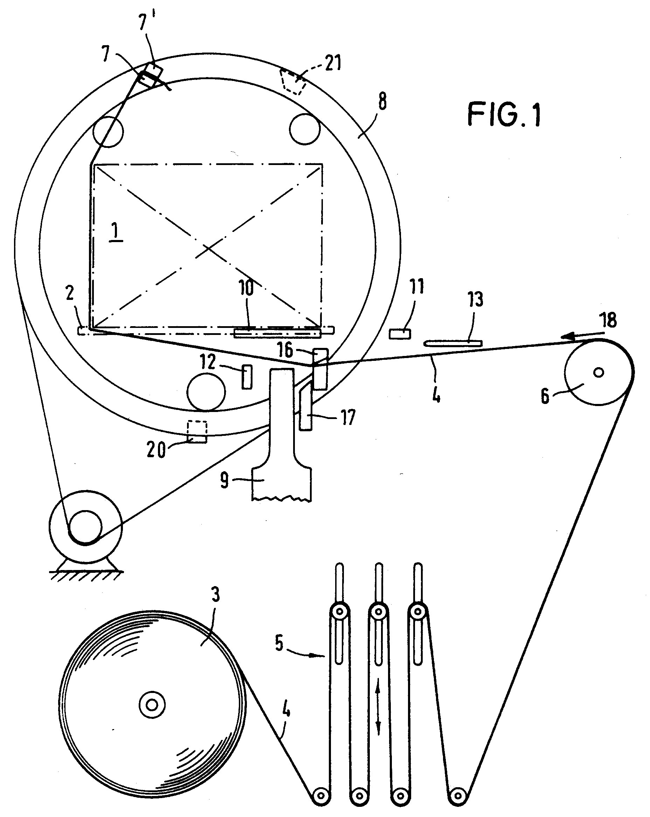

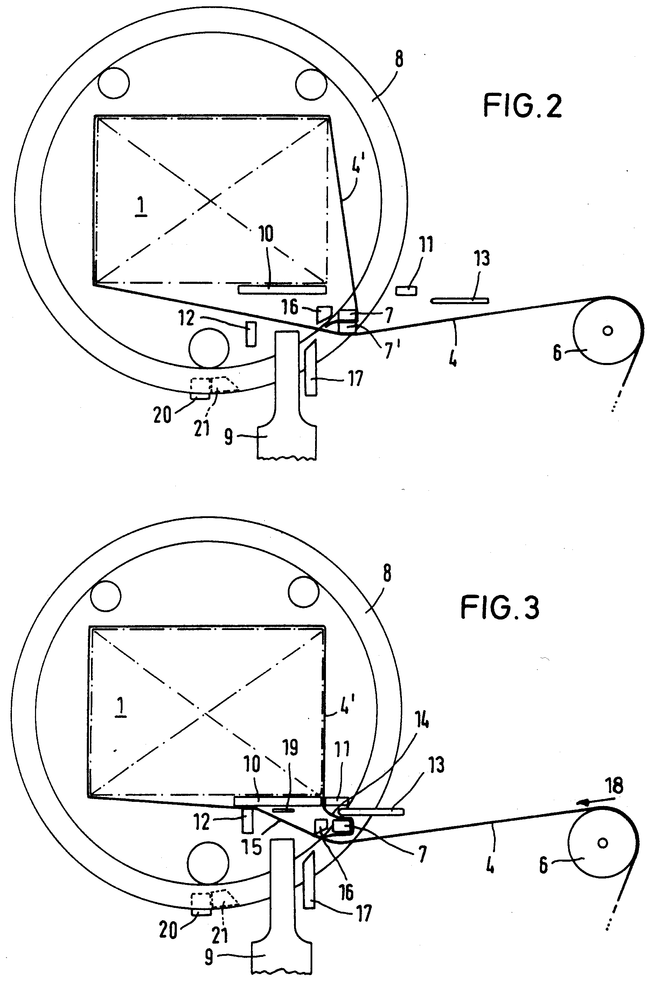

Wie die Fig. 1 zeigt, wird das zu umschnürende Packgut 1 auf einen Packguttisch 2 gestellt, der in der Umschnürungsebene einen Spalt aufweist, durch den das Umschnürungsmittel 4 hindurchgeführt werden kann. Der Packguttisch 2 und das Packgut 1 werden von einer Umschnürungsvorrichtung 8 umgeben, die im vorliegenden Ausführungsbeispiel von einem über einen Treibriemen antreibbaren Ring gebildet wird. An dieser Umschnürungsvorrichtung 8 ist ein Greifer 7 und 7' angeordnet, der den Anfang des Umschnürungsmittels 4 um das Packgut 1 bewegt und dabei das Umschnürungsmittel 4 von einer Vorratsrolle 3 abzieht. Das Umschnürungsmittel 4 ist von der Vorratsrolle 3 aus über eine Spannvorrichtung 5 und eine Umlenkrolle 6 durch eine Schneideinrichtung 16,17 geführt. Das Maschinengestell weist einen Anschlag 20 auf, der mit einem Anschlag 21 an der Umschnürungsvorrichtung 8 zusammenarbeitet. Bei Beginn der Umschnürungsbewegung wird der ortsfeste Anschlag 20 kurz aus der Bahn des an der Umschnürungsvorrichtung 8 befestigten Anschlages 21 herausbewegt, so daß der Umschnürungsring 8 um 360° gedreht werden kann, bis sein Anschlag 21 wieder gegen den Anschlag 20 anstößt. Diese Stellung zeigt die Fig. 2. Die Spannvorrichtung 5 hält das Umschnürungsmittel 4 gespannt, so daß Klemmen 11 und 12 die unter Spannung stehende Schlaufe 4' festklemmen können. Die erste Klemme 11, welche den vorderen Teil der Schlaufe 4' in Nähe des dem Umschnürungsmittel-Zulauf 18 zugewandten Endes der Widerlagerplatte 10 festhält, ist in Höhe der Widerlagerplatte 10 angeordnet und klemmt das Umschnürungsmittel 4 zwischen sich und der dem Umschnürungsmittel-Zulauf 18 zugewandten Kante der Widerlagerplatte 10 ein. Die zweite Klemme 12 klemmt das Umschnürungsmittel 4 im hinteren Bereich der Schlaufe 4' zwischen sich und der Unterseite der Widerlagerplatte 10 in Nähe der vom Umschnürungsmittel-Zulauf 18 abgewandten Kante der Widerlagerplatte 10 ein.

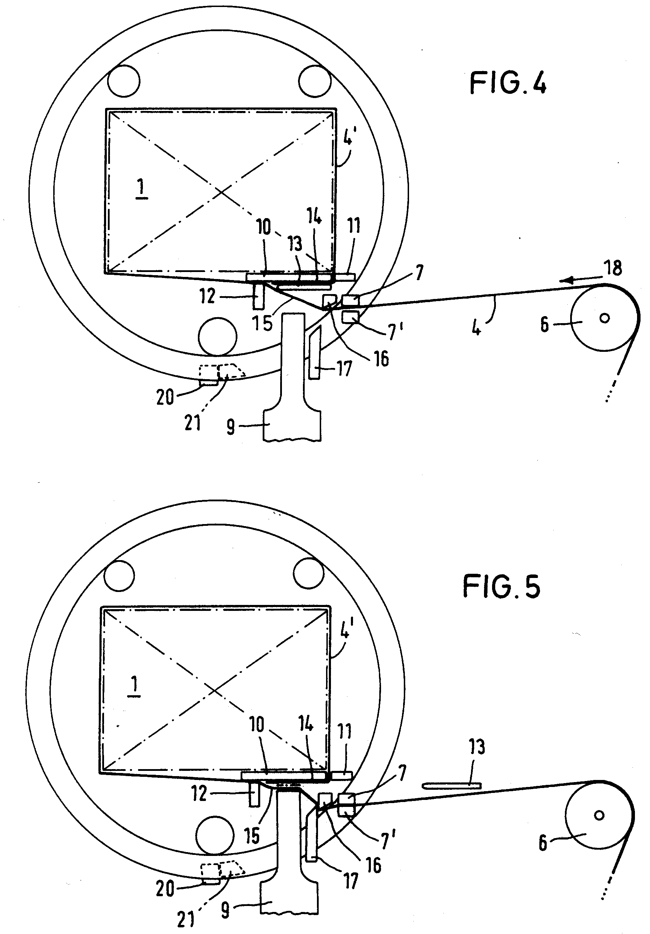

Damit der Anfangsbereich 14 der Schlaufe 4' zwischen der Widerlagerplatte 10 und dem Endbereich 15 der Schlaufe 4' zu liegen kommt, ist ein Zubringer 13 vorgesehen, der nach Öffnen des Greifers 7,7' und Zurückziehen des Greiferunterteils 7' aus der Umschnürungsebene den Anfangsbereich 14 unter die Widerlagerplatte 10 schiebt. Der Zubringer 13 für den Schlaufenanfang 14 bewegt sich im wesentlichen parallel zur Unterseite 10 der Widerlagerplatte. Dieser Zubringer 13 kann so ausgebildet sein, daß er den Anfangsbereich 14 gegen die Unterseite 10 der Widerlagerplatte 10 drückt und diesen Anfangsbereich sozusagen gegen diese Unterseite anbügelt. Weil der Umschnürungsmittel-Zulauf 18 höher angeordnet ist als das Greiferoberteil 7, springt das Umschnürungsmittel 4 nach Zurückziehen des Greiferunterteils 7' gegen das Greiferoberteil 7, so daß das Greiferunterteil 7' wieder in die Umschnürungsebene zurückbewegt werden kann, vgl. Fig. 4, und dann der Greifer 7,7' wieder geschlossen werden kann, so daß er den Anfang einer folgenden Schlaufe erfaßt.

Wie die Fig. 5 zeigt, kann nun durch Hochfahren eines Schließkopfes und einer beweglichen Schneide 17 die Schlaufe 4' vom übrigen Umschnürungsmittel 4 abgeschnitten und der Endbereich 15 der Schlaufe 4' mit dem Anfangsbereich 14 der Schlaufe 4' verbunden werden. Besteht das Umschnürungsmittel 4 aus einem verschweißfähigen Kunststoff, dann kann der vorzugsweise als Ultraschall-Schließkopf ausgebildete Schließkopf 9 die Endbereiche 14 und 15 der Schlaufe 4' zusammenschweißen. Sofern das Umschnürungsmittel 4 nicht aus einem verschweißbaren Werkstoff besteht, sondern beispielsweise aus Papier oder einem textilen Gewebe, dann ist die Umschnürungsmaschine mit einer aus Fig. 3 ersichtlichen Klebemittelzuführung 19 zu versehen, die einen Abschnitt eines Kunststoffbandes oder Klebstoff rechtwinklig zur Umschnürungsebene zwischen die Bandenden 14 und 15 zuführt, bevor der Schließkopf 9 den Endbereich 15 der Schlaufe 4' gegen den Anfangsbereich 14 der Schlaufe 4' drückt und mittels Ultraschall die Bandenden 14 und 15 miteinander verklebt.

Das Zuführen eines Abschnittes eines Kunststoffbandes und das Verkleben der Schlaufenenden eines aus Papier oder Gewebe bestehenden Umschnürungsmittels mit Hilfe eines Ultraschall-Generators ist dabei besonders vorteilhaft, weil das Zuführen eines Abschnittes eines Kunststoffbandes besonders einfach ist und beim Einsatz von Ultraschall nicht mehr Wärme erzeugt wird als zum Schmelzen des Kunststoffes notwendig ist.

### Bezugszeichenliste:

- 1: Packgut
- 2: Packguttisch
- 3: Vorrat des Umschnürungsmittels
- 4: Umschnürungsmittel
- 4': Schlaufe
- 5: Spannvorrichtung
- 6: Umlenkrolle
- 7: Greiferoberteil
- 7': Greiferunterteil
- 8: Umschnürungsvorrichtung
- 9: Schließkopf
- 10: Widerlagerplatte
- 11: erste Klemme
- 12: zweite Klemme
- 13: Zubringer des Schlaufenanfangs
- 14: Anfangsbereich der Schlaufe
- 15: Endbereich der Schlaufe
- 16: feststehende Schneide
- 17: bewegliche Schneide
- 18: Umschnürungsmittel-Zulauf
- 19: Klebemittelzuführung
- 20: Anschlag am Maschinengestell
- 21: Anschlag am Umschnürungsring

## Patentansprüche

1. Maschine zum Umschnüren von Packgut (1), mit
- einem Packguttisch (2), der in der Umschnürungsebene zum Durchlaß eines Umschnürungsmittels (4) einen Spalt aufweist,
- einer Umschnürungsvorrichtung (8), die einen den Anfang (14) des Umschnürungsmittels (4) unterhalb des Packguttisches (2) in einer Ausgangsstellung erfassenden, aus Oberteil (7) und Unterteil (7') bestehenden Greifer, der das Packgut (1) in der Umschnürungsebene umläuft und dabei das Umschnürungsmittel (4) von einem Vorrat (3) abzieht und in seine Ausgangsstellung zurückkehrt,
- einer Spannvorrichtung (5), welche die vom Umschnürungsmittel (4) gebildete Schlaufe (4') um das Packgut (1) spannt,
- einer Schließeinrichtung (9,10), welche einander überlappende Bereiche (14 und 15) der Schlaufe (4') miteinander verklebt oder verschweißt und die sich zusammensetzt aus einer unmittelbar unter das Packgut (1) im Überlappungsbereich (14-15) der Schlaufe (4') schiebbaren Widerlagerplatte (10) und einem gegen die sich überlappenden Bereiche (14,15) und die Widerlagerplatte (10) verschiebbaren Schließkopf (9),
- einer ersten Klemme (11), welche den vorderen Teil der Schlaufe (4') in Nähe des dem Umschnürungsmittel-Zulauf (18) zugewandten Endes der Widerlagerplatte (10) festhält,
- einer zweiten Klemme (12), welche den hinteren Teil der Schlaufe (4') in Nähe des dem Umschnürungsmittel-Zulauf (18) abgewandten Endes der Widerlagerplatte (10) festhält und
- einer Schneideinrichtung (16,17), welche die Schlaufe (4') vom Umschnürungsmittel (4) abschneidet, nachdem der Greifer (7,7') den Anfang für die folgende Schlaufe erfaßt hat,
dadurch gekennzeichnet, daß
die erste Klemme (11) in Höhe der Widerlagerplatte (10) angeordnet ist und unterhalb dieser Klemme (11) und oberhalb des in End- und Ausgangsstellung befindlichen Greifers (7,7') ein den Schlaufenanfang (14) nach Schließen der Klemme (11) und Öffnen des Greifers (7,7') unter die Unterseite der Widerlagerplatte (10) bringender Zubringer (13) angeordnet ist, der vor Hochfahren des Schließkopfes (9) in seine Ausgangsstellung zurückbewegbar ist und daß der Zulauf (18) des Umschnürungsmittels (4) höher angeordnet ist als die Unterseite des in Ausgangsstellung befindlichen Greiferoberteils (7) und das Greiferunterteil (7') nach Schließen der Klemme (11) aus der Umschnürungsebene herausbewegbar und vor Hochfahren des Schließkopfes (9) und der beweglichen Schneide (17) zum Ergreifen eines Anfangs einer folgenden Schlaufe in die Umschnürungsebene zurückbewegbar ist.

2. Maschine nach Anspruch 1, dadurch gekennzeichnet, daß die erste Klemme (11) das Umschnürungsmittel (4) im vorderen Bereich der Schlaufe (4') zwischen sich und der umschnürungsmittel-zulaufseitigen Kante der Widerlagerplatte (10) einklemmt.

3. Maschine nach Anspruch 1 oder 2, dadurch gekennzeichnet, daß die zweite Klemme (12) das Umschnürungsmittel (4) im hinteren Bereich der Schlaufe (4') zwischen sich und der Unterseite der Widerlagerplatte (10) in Nähe der vom Umschnürungsmittel-Zulauf (18) abgewandten Kante der Widerlagerplatte (10) einklemmt.

4. Maschine nach einem der Ansprüche 1 bis 3, dadurch gekennzeichnet, daß die Schneidvorrichtung (16,17) in Richtung des Umschnürungsmittel-Zulaufs (18) unmittelbar hinter dem in Ausgangsstellung stehenden Greifer (7,7') angeordnet ist, wobei die obere feststehende Schneide (16) etwa in Höhe des Greiferoberteils (7) angeordnet ist.

5. Maschine nach einem der Ansprüche 1 bis 4, dadurch gekennzeichnet, daß der Schließkopf (9) ein Ultraschall-Schließkopf ist.

6. Maschine nach einem der Ansprüche 1 bis 5, dadurch gekennzeichnet, daß unter der Widerlagerplatte (10) und im Bereich über dem Schließkopf (9) eine, schmelzbaren Kunststoff oder Klebstoff rechtwinklig zur Umschnürungsebene, zuführende Zuführeinrichtung (19) angeordnet ist, welche nach Zurückziehen des Zubringers (13) in die Ausgangsstellung und vor dem Hochfahren des Schließkopfes (9) einen Abschnitt eines Kunststoffbandes oder Klebstoff zwischen die zu verbindenden Überlappungsbereiche (14,15) der Schlaufe (4') zuführt.

7. Maschine nach einem der Ansprüche 1 bis 5, dadurch gekennzeichnet, daß die Umschnürungsvorrichtung (8) einen Anschlag (21) aufweist, der mit einem am Maschinengestell befindlichen Anschlag (20) zusammenwirkt, der bei Beginn einer Umschnürung aus der Bahn des an der Umschnürungsvorrichtung (8) befindlichen Anschlags (21) herausbewegbar ist.

8. Maschine nach einem der Ansprüche 1 bis 7, dadurch gekennzeichnet, daß die Umschnürungsvorrichtung (8) ein auf mindestens drei Rollen gelagerter Ring ist.
